# EUROPEAN PATENT SPECIFICATION

(11) **EP 4 127 308 B1**
(45) Date of publication and mention of the grant of the patent: **21.01.2026**
(21) Application number: 21721965.8
(22) Date of filing: 29.03.2021
(51) Int. Cl.: D21C 3/20, D21C 11/00

(54) **SEPARATION OF LIGNIN**
LIGNINABTRENNUNG
SÉPARATION DE LA LIGNINE

(30) Priority: 31.03.2020 FI 20205325
(43) Date of publication of application: 08.02.2023
(73) Proprietor: Chempolis Oy, 90660 Oulu (FI)
(72) Inventor: ROUHIAINEN, Maija, 90660 Oulu (FI); KUPIAINEN, Laura, 90660 Oulu (FI); ROUSU, Päivi, 90660 Oulu (FI)
(74) Representative: Kolster Oy Ab
(86) International application number: PCT/FI2021/050216
(87) International publication number: WO 2021/198555

(56) References cited:
- WO-A1-2019/158752
- WO-A1-92/13849
- WO-A2-2009/066007
- US-A1- 2008 299 629
- US-A1- 2014 182 582
- US-A1- 2016 031 921
- US-B1- 7 402 224

## Description

### FIELD OF THE INVENTION

The present invention relates to separation of lignin. More particularly, the invention relates to separation of lignin from an organic cooking liquor used in an organosolv pulping process of a lignocellulosic material.

### BACKGROUND OF THE INVENTION

An organosolv pulping technique using an organic solvent to solubilise lignin and hemicellulose from a lignocellulose material is widely studied in papermaking industry. Compared with kraft pulping or sulphite pulping, a relatively high quality lignin is obtained in organosolv pulping. Various organic solvents including alcohols and acids and combinations thereof have been used in the process.

WO 2011/154293 A1 discloses a process for the separation of lignins and sugars from an extraction liquor. The extraction liquid is obtained from a process for the production of paper pulp, lignins, sugars and acetic acid. The extraction liquor is concentrated to a dry matter content of 60-70% by weight and then mixed with water in equal parts by weight to provide suspended lignins in the solution. The suspended lignins are filtered off using a filter press (i.e. a pressure filter).

US2008 299 629 discloses a modular process for organosolv fractionation of a lignicellulosic feedstock into different component parts.

### BRIEF DESCRIPTION OF THE INVENTION

We have now found that lignins with varied molecular weight distributions can be obtained when lignin is separated from an organic solvent used in the organosolv pulping of a lignocellulosic material by adding an aqueous solution in stages. The molecular weight of lignin is adjusted by varying the amount of added aqueous solution. Each stage of adding the aqueous solution provides a lignin precipitate with a different molecular weight distribution.

The method of the present invention is defined in the current claim 1.

It was found in the present invention that the composition of the organic cooking solvent and the cooking temperature affect the molecular weight of the precipitated lignin. More particularly, increase of the amount of formic acid in respect of acetic acid gives smaller molecular weight lignin at a similar temperature, cooking time and precipitation conditions.

An advantage of the method of the invention is that several lignin fractions are obtained and each lignin fraction can be appropriately used in a specific application.

The present invention also provides a method for recovering solid lignin fractions from an organic solvent, having various molecular weights, by using the two-step cycle in the method.

The present invention further provides a method for adjusting the molecular weight of the solid lignin fractions separated from an organic solvent by using the two-step cycle in the method.

Another object of the present invention is to provide an apparatus comprising means for carrying out the method of the invention.

### DETAILED DESCRIPTION OF THE INVENTION

The present invention provides a method for the separation of lignin from an organic solvent as defined in the present claim

In an embodiment of the invention, the organic solvent means a cooking liquor which is used in the organosolv pulping of a lignocellulosic material. During pulping, lignin and hemicellulose dissolve in the cooking liquor and separate from a cellulose material.

Any lignocellulosic material suitable for organosolv pulping can be used in the invention. The lignocellulosic material may be, for example, softwood or hardwood, such as birch. Herbaceous plants, such as common reed or reed canary grass pulp, may also be used. Further, agricultural waste materials, such as straw, is applicable. In an embodiment, the lignocellulosic material is biomass of birch, wheat straw, rice straw or bagasse, without limiting thereto.

In an embodiment of the invention, the organosolv pulping is carried out at a temperature range of about 105°C to about 170°C. In another embodiment, the pulping is carried out at about 120°C to about 165°C. In a further embodiment, the pulping is carried out at about 130°C to about 160°C.

In an embodiment, the organic solvent, i.e. a cooking liquor, comprises formic acid, acetic acid, furan compound(s) including furfural, and water. In an embodiment, the amount of formic acid of the solvent is in the range of about 30% to about 75% by weight of the solvent. In another embodiment, the amount of formic acid of the solvent is in the range of about 40% to about 55% by weight. In an embodiment, the amount of acetic acid in the solvent is in the range of about 6% to about 55% by weight of the solvent. In an embodiment, the amount of water in the organic solvent is in the range of about 13% to about 22% by weight. In an embodiment, the amount of furan compound(s) of the solvent is in the range of about 0.01 to about 3% by weight.

In an embodiment, the density of the organic solvent is in the range of about 1.1 g/cm³ to about 1.2 g/cm³.

After cooking, cellulose is separated as a solid fraction from the cooking liquor containing lignin, hemicellulose and extractives, i.e. from a lignin-containing organic solvent. The dry matter content of the lignin-containing organic solvent is typically in the range of about 0.5% to about 12%.

In an embodiment, the lignin-containing organic solvent is concentrated to enhance the precipitation of lignin in the following two-step cycle of the method. The concentration also enhances recovery of the organic solvent. The concentration can be carried out in any suitable manner, such as by evaporation. In an embodiment, the concentration of the lignin-containing organic solvent before first addition of the aqueous solution provides a lignin concentrate having a dry matter content of about 5% to about 85%. In another embodiment, the dry matter is in the range of 20% to about 80%. In a further embodiment, the dry matter is in the range of about 50% to about 75%.

In the method of the invention, each step of adding the aqueous solution the lignin-containing organic solvent is followed by separation of the resultant lignin precipitate from the lignin-containing organic solvent. In an embodiment, the separation is carried out by filtration to provide a filtrate as a lignin-reduced solution. The filtration may be accomplished with a pressure filter or a membrane filter, such as microfiltration. In another embodiment, the separation is carried out with a separator or a centrifuge, such as a decanter centrifuge, to provide a supernatant as a lignin-reduced solution. Various combinations of the separation methods may also be employed. In an embodiment, the separation is carried out by filtration.

The two-step cycle of addition of the aqueous solution and separation is carried out at least two times. In an embodiment of the invention, the two-step cycle is carried out two to six times. The ratio of added aqueous solution with respect to a lignin-containing solution, i.e. the lignin-containing organic solvent in the first cycle and the lignin-reduced solutions in the subsequent cycles, varies in the range of 0.01:1 - 4:1 parts by weight. In an embodiment, the ratio varies in the range of 0.3:1 - 4:1 parts by weight.

Accordingly, in step a) of the method, a portion of lignin in the lignin-containing organic solvent is precipitated by adding an aqueous solution to the lignin-containing solvent. When the two-step cycle is initiated, the aqueous solution may alternatively be added to the lignin concentrate. In an embodiment, the amount of added aqueous solution with respect to the lignin-containing organic solvent and with respect to the lignin-reduced solution increases in each successive cycle.

In an embodiment, the aqueous solution is water. In another embodiment, the aqueous solution contains organic acids, furfural or a mixture thereof. Various process streams, such aqueous diluted acidic streams, circulated in the process are suitable for use as an aqueous solution in the precipitation of lignin. The aqueous solution may also contain minor amounts of substances derived from lignocellulosic materials, such as sugars. The amount of water of the aqueous solution is at least 22 wt-% to achieve precipitation of lignin.

In an embodiment, a lignin-containing organic solvent flow and an aqueous solution flow are connected in a steady stream by utilizing, e.g., Y-tube, or using a static mixer integrated into the pipeline, or using both. Y-tube is a pipeline construction wherein two separate pipelines join together to form one single pipeline. In the present invention, one of the two pipelines includes the lignin-containing organic solvent flow and the other pipeline includes the aqueous solution flow, which form one flow in the one single pipeline. Precipitation of lignin starts as soon as the two flows come into contact with each other. The arrangement ensures that lignin is evenly precipitated. The arrangement also enables the molecular weight of the end product to be optimally controlled.

In an embodiment, step a) is carried out at a temperature of about 20°C to about 125°C. In another embodiment, step a) is carried out at about 30°C to about 100°C. In a further embodiment, step a) is carried out at a temperature above 60°C up to about 100°C. In an embodiment, step a) is carried out at room temperature.

Separation of the lignin precipitate of the lignin-containing organic solvent in step b) provides a lignin-reduced solution. The solution containing reduced amount of lignin is treated in accordance with step a) by adding again an amount of an aqueous solution to the lignin-reduced solution. Each separation step b) provides a lignin-reduced solution which is further led to step a) and constitutes "a lignin-containing organic solvent", in other words, a starting material in step a).

In an embodiment, in the first cycle, the ratio of the added aqueous solution to the lignin-containing organic solvent in the first cycle is about 0.3:1 parts by weight.

In an embodiment, in the second cycle, the ratio of the added aqueous solution to the lignin-reduced solution is about 0.6:1 parts by weight.

In an embodiment, in the third cycle, the ratio of the added aqueous solution to the lignin-reduced solution is about 1:1 parts by weight.

In an embodiment, in the fourth cycle, the ratio of the added aqueous solution to the lignin-reduced solution is about 2:1 parts by weight.

In an embodiment, in the fifth cycle, the ratio of the added aqueous solution to the lignin-reduced solution is about 4:1 parts by weight.

The various lignin precipitates produced by the method of the invention exhibit different average molecular weights. An average molecular weight of lignin has an influence on the performance of lignin in several applications. Besides average molecular weight, molecular weight distribution of lignin determines the efficiency of lignin in the applications. Different lignin precipitates produced by the method of the invention may thus be appropriately selected for each specific application.

In an aspect, the present invention provides an apparatus comprising means for carrying out the method of the invention. In an embodiment the means comprise a Y-tube arranged for adding an aqueous solution to a lignin-containing organic solvent.

The following examples illustrate the invention without limiting the invention thereto.

### Example 1

Lignin was precipitated and filtered according to the method of the invention in laboratory scale as follows:
Lignocellulosic material of birch was delignified at a cooking temperature of 135°C for 50 minutes with a cooking liquor containing 51 wt-% of formic acid, the rest being acetic acid, water and furfural and having a density of 1.140 g/cm³. A solution containing lignin was obtained. This solution was filtered with a glass fiber filter with a pore size of 0.6 µm to provide a lignin-containing concentrate with a dry matter content of 8 wt-%. The concentrate was cooled to ambient temperature.

The lignin-containing concentrate was mixed with water at an ambient temperature in the ratio 1:0.3 whereby a first solid lignin precipitate was formed. The first lignin precipitate was filtered off using a glass fiber filter with a pore size of 0.6 µm. A first lignin-reduced filtrate was obtained. The first solid lignin fraction had the following characteristics as shown in Table 1: Mw of 6676 g/mol, Mn of 1706 and PDI of 3.

The first lignin-reduced filtrate was mixed with water in the ratio of 1:0.6. A second solid lignin fraction was formed and filtered similarly as the first solid lignin fraction. A second lignin-reduced filtrate was obtained. The second solid lignin fraction had a Mw of 2483 g/mol, Mn of 1302 and PDI of 1.91.

The second lignin-reduced filtrate was mixed with water in the ratio of 1:1. A third solid lignin fraction was formed and filtered similarly as the first solid lignin fraction. A third lignin-reduced filtrate was formed. The third solid lignin fraction had Mw of 1608 g/mol, Mn of 996 and PDI of 1.61.

The third lignin-reduced filtrate was mixed with water in the ratio of 1:2. A fourth solid lignin fraction was formed and filtered similarly as the first solid lignin fraction. A fourth lignin-reduced filtrate was formed. The fourth solid lignin fraction had a Mw of 1255 g/mol, Mn of 822 and PDI of 1.53.

The fourth lignin-reduced filtrate was mixed with water in the ratio of 1:4. A fifth solid lignin fraction was formed and filtered similarly as the first solid lignin fraction. The fifth solid lignin fraction had a Mw of 1042 g/mol, Mn of 735 and PDI of 1.42.

The lignocellulosic material of birch was also delignified at a cooking temperature of 145°C for 50 minutes with the same cooking liquor as that used at a cooking temperature of 135°C described above. The production of a lignin-containing concentrate and the precipitation of lignin was carried out as described above.

The results obtained in these two delignification conditions are summarized in Table 1.

**Table 1.**

| Concentrate:water | Cooking conditions | Mw | Mn | DI (Mw/Mn) | Lignin yield from dry matter, % |
|---|---|---|---|---|---|
| 1:0.3 | 135°C/50 min | 6676 | 1706 | 3.91 | 11 |
| 1:0.6 | 135°C/50 min | 2483 | 1302 | 1.91 | 14 |
| 1:1 | 135°C/50 min | 1608 | 996 | 1.61 | 7 |
| 1:2 | 135°C/50 min | 1255 | 822 | 1.53 | 6 |
| 1:4 | 135°C/50 min | 1042 | 735 | 1.42 | 2 |
| 1:0.3 | 145°C/50 min | 4747 | 1583 | 3 | 29 |
| 1:0.6 | 145°C/50 min | 2163 | 1174 | 1.84 | 21 |
| 1:1 | 145°C/50 min | 1527 | 932 | 1.64 | 12 |
| 1:2 | 145°C/50 min | 1175 | 780 | 1.51 | 9 |
| 1:4 | 145°C/50 min | 1033 | 704 | 1.47 | 4 |

### Example 2

Lignocellulosic material of birch was delignified at a cooking temperature of 135°C for 50 minutes with a cooking liquor containing 41 wt-% of formic acid, the rest being acetic acid, water and furfural and having density of 1.125 g/cm³. The lignocellulosic material was also delignified at a cooking temperature of 145°C for 50 minutes with the same cooking liquor as that used at a cooking temperature of 135°C described above.

The production of a lignin-containing concentrate and the precipitation of lignin was carried out in a similar manner as described in example 1.

The results obtained in these two delignification conditions are summarized in Table 2.

**Table 2.**

| Concentrate:water | Cooking conditions | Mw | Mn | DI (Mw/Mn) | Lignin yield from dry matter, % |
|---|---|---|---|---|---|
| 1:0.3 | 135°C/50 min | 7906 | 1715 | 4.61 | 10 |
| 1:0.6 | 135°C/50 min | 2670 | 1344 | 1.99 | 19 |
| 1:1 | 135°C/50 min | 1683 | 1020 | 1.64 | 11 |
| 1:2 | 135°C/50 min | 1255 | 831 | 1.51 | 9 |
| 1:4 | 135°C/50 min | 1065 | 736 | 1.45 | 3 |
| 1:0.3 | 145°C/50 min | 6344 | 1714 | 3.7 | 16 |
| 1:0.6 | 145°C/50 min | 2382 | 1245 | 1.91 | 20 |
| 1:1 | 145°C/50 min | 1601 | 967 | 1.66 | 11 |
| 1:2 | 145°C/50 min | 1197 | 792 | 1.51 | 9 |
| 1:4 | 145°C/50 min | 1023 | 709 | 1.44 | 3 |

The results of Tables 1 and 2 show that the molecular weight of lignin can be adjusted by varying the amount of water used for the precipitation of lignin. The results further show that the molecular weight of lignin can be adjusted by adjusting the composition of a cooking liquor and the cooking temperature in the organosolv pulping of a lignocellulosic material. More particularly, the molecular weight of a lignin precipitate is decreased by increasing the amount of water for the precipitation of lignin. The molecular weight of lignin is also decreased by elevating the cooking temperature at the same cooking time. Further, increase of the amount of formic acid in the cooking liquor results in lower molecular weights at the same delignification conditions.

## Claims

1. A method for the separation of lignin from an organic solvent, comprising multiple two-step cycles, wherein each two-step cycle comprises the steps of:
a) adding an aqueous solution to a lignin-containing organic solvent to precipitate a portion of lignin present in the solvent,
b) separating and recovering the lignin precipitate from the lignin-containing organic solvent to provide a lignin-reduced solution that forms a starting material to be treated with the aqueous solution in the next two-step cycle,
wherein the method comprises at least two of said two-step cycles,
wherein the ratio of added aqueous solution with respect to the lignin-containing organic solvent or with respect to the lignin-reduced solution in the cycles varies in the range of 0.01:1 - 4:1 parts by weight,
wherein the amount of added aqueous solution with respect to the lignin-containing organic solvent and with respect to the lignin-reduced solution increases in each successive cycle, and
wherein the organic solvent is a cooking liquor used in the organosolv pulping of a lignocellulosic material at a temperature range of about 105°C to about 170°C.

2. The method of claim 1, wherein the organosolv pulping is carried out at a temperature range of about 120°C to about 165°C, more specifically at about 130°C to about 160°C.

3. The method of any one of the preceding claims, wherein the organic solvent comprises formic acid, acetic acid, furan compound(s) including furfural, and water.

4. The method of claim 3, wherein the amount of formic acid of the solvent is in the range of about 30% to about 75% by weight of the solvent, specifically about 40% to about 55% by weight.

5. The method of claim 3 or 4, wherein the amount of acetic acid of the solvent is in the range of about 6% to about 55% by weight of the solvent.

6. The method of any one of claims 3 to 5, wherein the amount of water of the organic solvent is in the range of about 13% to about 22% by weight.

7. The method of any one of claims 3 to 6, wherein the amount of furan compound(s) including furfural of the solvent is in the range of about 0.01 to about 3% by weight.

8. The method of any one of the preceding claims, wherein the aqueous solution is water.

9. The method of any one of claims 1 to 7, wherein the aqueous solution contains organic acids, furfural or a mixture thereof.

10. The method of any one of the preceding claims, wherein the method comprises 2-6 two-step cycles.

11. The method of claim 10, wherein the ratio of the added aqueous solution to the lignin-containing organic solvent in the first two step-cycle is about 0.3:1 parts by weight.

12. The method of claim 10 or claim 11, wherein the ratio of the added aqueous solution to the lignin-reduced solution in the second two step-cycle is about 0.6:1 parts by weight.

13. The method of any one of claims 10 to 12, wherein the ratio of the added aqueous solution to the lignin-reduced solution in the third two-step cycle is about 1:1 parts by weight.

14. The method of any one of claims 10 to 13, wherein the ratio of the added aqueous solution to the lignin-reduced solution in the fourth two-step cycle is about 2:1 parts by weight.

15. The method of any one of claims 10 to 14, wherein the ratio of the added aqueous solution to the lignin-reduced solution in the fifth two-step cycle is about 4:1 parts by weight.

## Patentansprüche

1. Verfahren zur Abtrennung von Lignin von einem organischen Lösungsmittel, das mehrere zweischrittige Zyklen umfasst, wobei jeder zweischrittige Zyklus die folgenden Schritte umfasst:
a) Beimengen einer wässrigen Lösung zu einem ligninhaltigen organischen Lösungsmittel zum Ausfällen eines Teils von in dem Lösungsmittel vorhandenem Lignin,
b) Abtrennen und Rückgewinnen des Lignin-Fällprodukts von dem ligninhaltigen organischen Lösungsmittel, um eine ligninreduzierte Lösung bereitzustellen, die ein Ausgangsmaterial bildet, das mit der wässrigen Lösung im nächsten zweischrittigen Zyklus zu behandeln ist,
wobei das Verfahren mindestens zwei der zweischrittigen Zyklen umfasst,
wobei das Verhältnis von beigemengter wässriger Lösung, bezogen auf das ligninhaltige organische Lösungsmittel oder bezogen auf die ligninreduzierte Lösung, in den Zyklen im Bereich von 0,01:1 bis 4:1 Gewichtsanteilen schwankt,
wobei die Menge an beigemengter wässriger Lösung, bezogen auf das ligninhaltige organische Lösungsmittel und bezogen auf die ligninreduzierte Lösung, in jedem nachfolgenden Zyklus zunimmt, und
wobei das organische Lösungsmittel eine Aufschlusslösung ist, die beim Organosolv-Aufschluss eines Lignocellulosematerials in einem Temperaturbereich von etwa 105°C bis etwa 170°C verwendet wird.

2. Verfahren nach Anspruch 1, wobei der Organosolv-Aufschluss in einem Temperaturbereich von etwa 120°C bis etwa 165°C, genauer gesagt von etwa 130°C bis etwa 160°C, durchgeführt wird.

3. Verfahren nach einem der vorhergehenden Ansprüche, wobei das organische Lösungsmittel Ameisensäure, Essigsäure Furanverbindung/en, die Furfural umfasst bzw. umfassen, und Wasser umfasst.

4. Verfahren nach Anspruch 3, wobei die Menge an Ameisensäure des Lösungsmittels im Bereich von etwa 30 % bis etwa 75 %, bezogen auf das Gewicht des Lösungsmittels, insbesondere von etwa 40 % bis etwa 55 %, bezogen auf das Gewicht, liegt.

5. Verfahren nach Anspruch 3 oder 4, wobei die Menge an Essigsäure des Lösungsmittels im Bereich von etwa 6 % bis etwa 55 %, bezogen auf das Gewicht des Lösungsmittels, liegt.

6. Verfahren nach einem der Ansprüche 3 bis 5, wobei die Menge an Wasser des organischen Lösungsmittels im Bereich von etwa 13 % bis etwa 22 %, bezogen auf das Gewicht, liegt.

7. Verfahren nach einem der Ansprüche 3 bis 6, wobei die Menge an Furanverbindung/en, die Furfural umfasst bzw. umfassen, des Lösungsmittels im Bereich von etwa 0,1 bis etwa 3 %, bezogen auf das Gewicht, liegt.

8. Verfahren nach einem der vorhergehenden Ansprüche, wobei die wässrige Lösung Wasser ist.

9. Verfahren nach einem der Ansprüche 1 bis 7, wobei die wässrige Lösung organische Säuren, Furfural oder ein Gemisch daraus enthält.

10. Verfahren nach einem der vorhergehenden Ansprüche, wobei das Verfahren 2 bis 6 zweischrittige Zyklen umfasst.

11. Verfahren nach Anspruch 10, wobei das Verhältnis der beigemengten wässrigen Lösung zu dem ligninhaltigen organischen Lösungsmittel in dem ersten zweischrittigen Zyklus etwa 0,3:1 Gewichtsanteile beträgt.

12. Verfahren nach Anspruch 10 oder Anspruch 11, wobei das Verhältnis der beigemengten wässrigen Lösung zu der ligninreduzierten Lösung in dem zweiten zweischrittigen Zyklus etwa 0,6:1 Gewichtsanteile beträgt.

13. Verfahren nach einem der Ansprüche 10 bis 12, wobei das Verhältnis der beigemengten wässrigen Lösung zu der ligninreduzierten Lösung in dem dritten zweischrittigen Zyklus etwa 1:1 Gewichtsanteile beträgt.

14. Verfahren nach einem der Ansprüche 10 bis 13, wobei das Verhältnis der beigemengten wässrigen Lösung zu der ligninreduzierten Lösung in dem vierten zweischrittigen Zyklus etwa 2:1 Gewichtsanteile beträgt.

15. Verfahren nach einem der Ansprüche 10 bis 14, wobei das Verhältnis der beigemengten wässrigen Lösung zu der ligninreduzierten Lösung in dem fünften zweischrittigen Zyklus etwa 4:1 Gewichtsanteile beträgt.

## Revendications

1. Procédé pour séparer la lignine d'un solvant organique, comprenant de multiples cycles à deux étapes, dans lequel chaque cycle à deux étapes comprend les étapes de :
a) addition d'une solution aqueuse à un solvant organique contenant de la lignine pour précipiter une partie de la lignine présente dans le solvant,
b) séparation et récupération du précipité de lignine à partir du solvant organique contenant de la lignine pour donner une solution à teneur réduite en lignine qui forme un matériau de départ devant être traité avec la solution aqueuse dans le cycle à deux étapes suivant,
lequel procédé comprend au moins deux desdits cycles en deux étapes,
dans lequel le rapport de la solution aqueuse ajoutée au solvant organique contenant de la lignine ou à la solution à teneur réduite en lignine dans le cycle varie dans la plage allant de 0,01/1 à 4/1 parties en poids,
dans lequel la quantité de solution aqueuse ajoutée par rapport au solvant organique contenant de la lignine et par rapport à la solution à teneur réduite en lignine augmente dans chaque cycle successif, et
dans lequel le solvant organique est une liqueur de cuisson utilisée dans la mise en pâte par procédé Organosolv d'un matériau lignocellulosique dans la plage de températures allant d'environ 105°C à environ 170°C.

2. Procédé selon la revendication 1, dans lequel la mise en pâte par procédé Organosolv est effectuée dans une plage de températures allant d'environ 120°C à environ 165°C, plus spécifiquement d'environ 130°C à environ 160°C.

3. Procédé selon l'une quelconque des revendications précédentes, dans lequel le solvant organique comprend de l'acide formique, de l'acide acétique, un ou plusieurs composés de furane y compris le furfural, et de l'eau.

4. Procédé selon la revendication 3, dans lequel la quantité d'acide formique dans le solvant est située dans la plage allant d'environ 30 % à environ 75 % en poids du solvant, spécifiquement d'environ 40 % à environ 55 % en poids.

5. Procédé selon la revendication 3 ou 4, dans lequel la quantité d'acide acétique dans le solvant est située dans la plage allant d'environ 6 % à environ 55 % en poids du solvant.

6. Procédé selon l'une quelconque des revendications 3 à 5, dans lequel la quantité d'eau dans le solvant organique est située dans la plage allant d'environ 13 % à environ 22 % en poids.

7. Procédé selon l'une quelconque des revendications 3 à 6, dans lequel la quantité de composé(s) de furane y compris le furfural dans le solvant est située dans la plage allant d'environ 0,01 à environ 3 % en poids.

8. Procédé selon l'une quelconque des revendications précédentes, dans lequel la solution aqueuse est de l'eau.

9. Procédé selon l'une quelconque des revendications 1 à 7, dans lequel la solution aqueuse contient des acides organiques, du furfural ou un mélange de ceux-ci.

10. Procédé selon l'une quelconque des revendications précédentes, lequel procédé comprend 2 à 6 cycles à deux étapes.

11. Procédé selon la revendication 10, dans lequel le rapport de la solution aqueuse ajoutée au solvant organique contenant de la lignine dans le premier cycle à deux étapes est d'environ 0,3/1 partie en poids.

12. Procédé selon la revendication 10 ou la revendication 11, dans lequel le rapport de la solution aqueuse ajoutée à la solution à teneur réduite en lignine dans le deuxième cycle à deux étapes est d'environ 0,6/1 partie en poids.

13. Procédé selon l'une quelconque des revendications 10 à 12, dans lequel le rapport de la solution aqueuse ajoutée à la solution à teneur réduite en lignine dans le troisième cycle à deux étapes est d'environ 1/1 partie en poids.

14. Procédé selon l'une quelconque des revendications 10 à 13, dans lequel le rapport de la solution aqueuse ajoutée à la solution à teneur réduite en lignine dans le quatrième cycle à deux étapes est d'environ 2/1 parties en poids.

15. Procédé selon l'une quelconque des revendications 10 à 14, dans lequel le rapport de la solution aqueuse ajoutée à la solution à teneur réduite en lignine dans le cinquième cycle à deux étapes est d'environ 4/1 parties en poids.
